# EUROPÄISCHE PATENTSCHRIFT

(11) **EP 4 326 943 B1**
(45) Veröffentlichungstag und Bekanntmachung des Hinweises auf die Patenterteilung: **22.01.2025**
(21) Anmeldenummer: 22723963.9
(22) Anmeldetag: 19.04.2022
(51) Int. Cl.: E01B 31/12

(54) **VERFAHREN ZUM REPROFILIEREN VON ZUMINDEST EINER ZUNGE VON EINER IN EINEM SCHIENENSTRANG VERLEGTEN WEICHE**
METHOD FOR REPROFILING AT LEAST ONE SWITCH BLADE IN POINTS LAID IN A RAILWAY TRACK
PROCÉDÉ DE REPROFILAGE D'AU MOINS UNE LAME D'UN AIGUILLAGE POSÉ DANS UNE VOIE FERRÉE

(30) Priorität: 21.04.2021 AT 502942021
(43) Veröffentlichungstag der Anmeldung: 28.02.2024
(73) Patentinhaber: MATE GmbH, 4656 Kirchham bei Vorchdorf (AT)
(72) Erfinder: HOFMANN, Stefan, 4662 Steyrermühl (AT)
(74) Vertreter: Burger, Hannes Alfred
(86) Internationale Anmeldenummer: PCT/AT2022/060124
(87) Internationale Veröffentlichungsnummer: WO 2022/221898

(56) Entgegenhaltungen:
- WO-A1-2012/061864
- DE-A1- 102010 022 419

## Beschreibung

Die Erfindung betrifft ein Verfahren zum Reprofilieren von zumindest einer Zunge von einer in einem Schienenstrang verlegten Weiche.

In einem Gleis verlegte Schienen unterliegen naturgemäß einem Verschleiß, der hauptsächlich durch die zwischen den Schienen und den Rädern der darauf bewegten Schienenfahrzeuge wirkenden Kontaktkräfte bewirkt wird. Die dabei auftretenden, unerwünschten Veränderungen des Schienenquerschnitts werden zur Verlängerung der Lebensdauer regelmäßig oder anlassbezogen einem Verfahren zum Reprofilieren unterzogen. Das Reprofilieren erfolgt dabei vorwiegend mit spanabhebenden Bearbeitungsverfahren wie etwa Schleifen, Hobeln oder Fräsen, wobei diese Bearbeitungsverfahren entweder an ausgebauten Schienen ausgeführt werden oder mittels schienengeführten Bearbeitungsfahrzeugen im verlegten Gleis erfolgen können.

Die WO2012/061864 A1 offenbart ein Verfahren zum Profilieren einer Lauffläche einer verlegten Schiene mit einem Bearbeitungsfahrzeug oder der inneren Seitenkante mit einem quer zur Schiene verstellbaren ersten Kopiertastelement und Bearbeiten der Fahrkante und/oder der Fahrfläche der Schiene mit einem an das erste Kopiertastelement gekoppelten Bearbeitungswerkzeug. In dem Verfahren wird vorübergehend entweder die äußere Seitenfläche der zu bearbeitenden Schiene oder eine Seitenfläche der parallelen Schiene mit einem zweiten Kopiertastelement -oder nach Verstellung des ersten Kopiertastelements, mit diesem die äußere Seitenfläche angetastet und das Bearbeitungswerkzeug wird
a) entweder an das zweite Kopiertastelement gekoppelt - sowie gleichzeitig die Koppelung zwischen erstem Kopiertastelement und Bearbeitungswerkzeug deaktiviert -
b) oder an das verstellte erste Kopiertastelement gekoppelt.

In der DE 10 2010 022 419 A1 ist ein Verfahren zum Herstellen einer außerhalb einer schienengebundenen Fahrbahn gelegenen Hilfsfahrbahn - als Lehre zum Schleifen einer definierten Rampe auf einer Schiene der Fahrbahn - offenbart. Dabei wird an einer vordefinierten Stelle der Schiene eine abzuschleifende Überhöhung gemessen, über die eine Länge der abzuschleifenden Rampe berechnet wird und ein Rampenanfang sowie ein Rampenende bestimmt werden, wobei die gesamte Rampenlänge in jede Richtung einem ca. tausendfachen der Überhöhung entspricht, und wobei die ermittelte abzuschleifende Überhöhung die Mitte der noch abzuschleifenden Rampe bildet. Die Hilfsfahrbahn wird an der zu schleifenden Schiene oder an einer benachbart dazu gelegenen Schiene außerhalb der schienengebundenen Fahrbahn befestigt und hinsichtlich ihrer Höhe derart eingestellt, dass diese das Höhenprofil der später abzuschleifenden Rampe in der Art einer Lehre vorgibt.

Es wurde dazu in der EP 1 820 902 A1 der gleichen Anmelderin ein Verfahren zum Fräsen von Schienenköpfen der in einer Bettung verlegten Gleisschienen mittels einer verfahrbaren Vorrichtung zum Fräsen vorgeschlagen. Die Fräsvorrichtung umfasst einen rotierend angetriebenen Fräsmesserkopf, der in einem Fräsmesserkopfantrieb enthaltenden Fahrwerk gelagert ist. Der Fräsmesserkopf wird der Höhe und/oder der Seite nach mit Führungsmittel entlang des zu bearbeitenden Schienenkopfes geführt, wobei der Fräsmesserkopf mehrere in Umfangsrichtung des Fräsmesserkopfs hintereinander angeordnete Sätze von Messerkopfschneiden aufweist. Jeder Satz an Messerkopfschneiden bildet das zu bearbeitende Profil des Schienenkopfes in annähern kreisförmigen Teilbögen verschiedener Radien nach. Die Bearbeitung von insbesondere relativ bezüglich der festverlegten Schienen dazu verlagerbaren Schienenteilstücken, wie z.B. den Zungen von Weichen, wurden die Zungen an die jeweilige Schiene in Querrichtung gesehen daran angelegt, bedarfsweise durch Unterlegen einer Unterfütterung unterhalb der Zunge angehoben und anschließend gemeinsam mit der Schiene dem Reprofilierungsvorgang unterzogen. Es musste entweder die Zungenschiene angehoben bzw. überhoben werden oder es konnte die gesamte Zungenschiene nicht ohne Beschädigung der Backenschiene bearbeitet werden.

Ein Verfahren zum Reprofilieren einer Schiene ist beispielsweise aus WO 02/06587 A1 bekannt geworden. Darin ist ein gleisgeführtes Bearbeitungsfahrzeug offenbart, mit dem die Lauffläche einer Schiene, die im Wesentlichen die Fahrfläche und die Fahrkante umfasst, mittels Umfangsfräsen und erforderlichenfalls mittels eines Schleifvorganges wieder an das Sollprofil herangeführt oder angenähert wird. Mit einem derartiges Verfahren und einem derartigen Bearbeitungsfahrzeug kann in kurzer Zeit auf rationelle Weise das Sollprofil von Schienen wieder hergestellt werden, deren Einsatz ist jedoch nur auf durchgehenden Gleisabschnitten möglich gewesen, während an Gleisabschnitten mit Unterbrechungen der Schienen, wie zum Beispiel im Bereich von Weichen oder Kreuzungen das Reprofilieren vielfach mit handgeführten Bearbeitungswerkzeugen oder kleineren Spezialvorrichtungen erfolgt, wodurch das Reprofilieren von Gleisen im Bereich von Weichen oder Kreuzungen aufgrund eines hohen manuellen Arbeitsanteiles nach wie vor längere Sperrzeiten und dadurch länger andauernde Behinderungen des Schienenverkehrs mit entsprechend hohen Folgekosten verursachen.

Aufgabe der vorliegenden Erfindung war es, die Nachteile des Standes der Technik zu überwinden und ein Verfahren zum Reprofilieren von zumindest einer Zunge zur Verfügung zu stellen, bei dem dies einfacher durchzuführen ist und Beschädigungen an der jeweils damit zusammenwirkenden Backenschiene vermieden werden können.

Diese Aufgabe wird durch ein Verfahren gemäß den Ansprüchen gelöst.

Das Verfahren dient zum Reprofilieren von zumindest einer Zunge von einer in einem Schienenstrang verlegten Weiche mittels zumindest eines an einem Bearbeitungsfahrzeug relativ dazu verstellbar gehaltenen ersten Bearbeitungsaggregats mit einem ersten Bearbeitungswerkzeug. Zur Durchführung des Verfahrens sind zumindest folgende Verfahrensschritte durchzuführen oder vorgesehen:
- Befahren des Schienenstrangs auf dessen verlegten Schienen mit dem Bearbeitungsfahrzeug bis in den Bereich außerhalb der zu reprofilierenden Weiche,
- beabstandetes Anordnen jener zu reprofilierenden Zunge von jener mit der Zunge zusammenwirkenden Backenschiene der Schienen in Querrichtung bezüglich einer vom Schienenstrang definierten Gleisachse und dabei Ausbilden eines sich in Richtung der Gleisachse erstreckenden Spalts zwischen der Backenschiene und jener zu reprofilierenden Zunge,
- Verbringen des Bearbeitungsfahrzeugs mit seinem zumindest einen ersten Bearbeitungswerkzeug zu jener zu reprofilierenden Zunge,
- Hineinverstellen und Verbringen zumindest eines am Bearbeitungsfahrzeug gehaltenen Gegenhalters innerhalb des ausgebildeten Spalts zwischen der Backenschiene und jener zu reprofilierenden Zunge,
- Durchführen eines ersten Bearbeitungsschritts der Profilbearbeitung durch Reprofilierung an jener zu reprofilierenden Zunge, bei der das zumindest eine erste Bearbeitungsaggregat mit dessen ersten Bearbeitungswerkzeug an jener zu reprofilierenden Zunge entlanggeführt wird, und
- Andrücken jener zu reprofilierenden Zunge während der Profilbearbeitung mittels des zumindest einen ersten Bearbeitungswerkzeugs an den Gegenhalter und Abstützen jener zu reprofilierenden Zunge in Querrichtung bezüglich der Gleisachse am Gegenhalter.

Vorteilhaft ist bei den hier gewählten Verfahrensschritten, dass durch das Vorsehen des zumindest einen Gegenhalters, welcher in den zwischen der zu bearbeitenden Zunge und dem jeweiligen Schienen-Teilabschnitt, nämlich der Backenschiene, eine Querstabilisierung der Zunge für die Profilbearbeitung erzielt wird. Dabei werden vom zumindest einen Gegenhalter die bei der Profilbearbeitung vom Bearbeitungswerkzeug eingebrachten Bearbeitungskräfte auf das Bearbeitungsfahrzeug hin übertragen. Ein direktes Anliegen oder ein Abstützen der jeweiligen Zunge an der mit dieser zusammenwirkenden Backenschiene wird so sicher vermieden. Weiters wird durch die beabstandete Anordnung und der damit verbundenen Ausbildung des Spaltes eine unbeabsichtigte Mitbearbeitung oder Beschädigung der Backenschiene durch das die Profilbearbeitung an der Zunge durchführende Bearbeitungswerkzeug verhindert.

Vorteilhaft ist auch eine Verfahrensvariante, bei welcher der zumindest eine Gegenhalter während der Profilbearbeitung an jener zu reprofilierenden Zunge ebenfalls an jener zu reprofilierenden Zunge entlanggeführt wird. Damit kann eine sichere und über die Längserstreckung ständige seitliche Abstützung der Zunge am zumindest einen Gegenhalter erzielt werden.

Weiters ist ein Vorgehen vorteilhaft, bei dem jene zu reprofilierenden Zunge während der Profilbearbeitung auf zumindest einer unterhalb derselben befindlichen Schwelle, gegebenenfalls unter Zwischenschaltung einer Gleitstuhlplatte, auflagernd auf der zumindest einen Schwelle abgestützt wird. Damit kann eine sicherere Lastabtragung der Bearbeitungskraft während der Profilbearbeitung ermöglicht werden.

Eine weitere vorteilhafte Vorgehensweise ist dadurch gekennzeichnet, dass unmittelbar nachfolgend an den ersten Bearbeitungsschritt mittels des ersten Bearbeitungsaggregats und dessen ersten Bearbeitungswerkzeug ein weiterer Bearbeitungsschritt mittels eines weiteren Bearbeitungsaggregats mit dessen weiteren Bearbeitungswerkzeug an jener zu reprofilierenden Zunge durchgeführt wird. So kann nach einem größeren Materialabtrag, wie z.B. einem Fräsvorgang, eine Feinbearbeitung zur Verbesserung oder Erhöhung der Oberflächengüte durchgeführt werden.

Vorteilhaft ist auch eine Verfahrensvariante, bei welcher die Profilbearbeitung an jener zu reprofilierenden Zunge während der Bearbeitungsfahrt des Bearbeitungsfahrzeugs durchgeführt wird. Dabei wird das jeweilige Bearbeitungsaggregat gemeinsam während der Bearbeitungsfahrt mit dem Bearbeitungsfahrzeug in Richtung der Längserstreckung des Schienenstrangs mitbewegt. Eine Höhen- und/oder Querausrichtung des Bearbeitungsaggregats kann dabei zusätzlich noch durchgeführt werden.

Eine andere Vorgehensweise zeichnet sich dadurch aus, wenn die Profilbearbeitung an jener zu reprofilierenden Zunge bei ortsfester Anordnung des Bearbeitungsfahrzeugs und relativer Verlagerung des Bearbeitungsaggregats mit dessen Bearbeitungswerkzeug bezüglich des Bearbeitungsfahrzeugs durchgeführt wird. Dabei kann das jeweilige Bearbeitungsaggregat mittels eigener Verstellanordnungen bei ortsfestem Stillstand des Bearbeitungsfahrzeug entlang der zu reprofilierenden Zunge relativ dazu geführt verstellt werden. So kann eine noch exaktere und gleichmäßigere Nachführung des Bearbeitungswerkzeugs an der zu bearbeitenden Zunge ermöglicht werden.

Weiters ist ein Vorgehen vorteilhaft, bei dem vor dem Beginn der Bearbeitungsschritte der Profilbearbeitung an jener zu reprofilierenden Zunge zuerst die den Schienenstrang bildenden Schienen reprofiliert werden, insbesondere an deren Lauffläche reprofiliert werden. Es erfolgt bei der Reprofilierung der erforderliche Abtrag an verschlissenem und/oder beschädigtem fehlerhaften Schienenwerkstoff in genseitiger Abstimmung von Backenschiene und Zungenschiene zueinander in Höhenrichtung. Es kann auch erforderlich sein, die Zungenschiene oder die Backenschiene in vertikaler Richtung mehr zu bearbeiten.

Eine andere Vorgehensweise zeichnet sich dadurch aus, wenn die den Schienenstrang bildenden Schienen außerhalb der Weiche reprofiliert werden.

Vorteilhaft ist auch eine Verfahrensvariante, bei welcher zumindest einzelne Schienen-Teilabschnitte der Schienen innerhalb der Weiche reprofiliert werden, insbesondere die Backenschiene, die Zwischenschiene das Herzstück mit der Flügelschiene und gegebenenfalls der Herzstückspitze, reprofiliert werden.

Eine weitere vorteilhafte Vorgehensweise ist dadurch gekennzeichnet, dass das Reprofilieren der Schienen und auch das Reprofilieren jener zu reprofilierenden Zunge jeweils mit denselben Bearbeitungsaggregaten durchgeführt wird. Damit kann der maschinentechnische Aufwand geringer gehalten werden. Weiters kann so aber auch die Maschinengröße des Bearbeitungsfahrzeugs kleiner und somit kostengünstiger ausgebildet werden.

Vorteilhaft ist auch eine Verfahrensvariante, bei welcher für die Durchführung des Reprofilierens jener zu reprofilierenden Zunge das Bearbeitungsaggregat oder die Bearbeitungsaggregate von der jeweiligen Schiene zu jener zu reprofilierenden Zunge hin verlagert werden. Dies kann mittels eigener Führungs- und/oder Verstellanordnungen durchgeführt werden. Die entsprechende Ausrichtung für die Profilbearbeitung kann mittels Tastsensoren erfolgen, um eine korrekte Reprofilierung erzielen zu können.

Eine andere Vorgehensweise zeichnet sich dadurch aus, wenn das Reprofilieren jener zu reprofilierenden Zunge und das Reprofilieren der Schienen mittels zueinander unterschiedlich bezüglich von deren Arbeitsprofil ausgebildeter Bearbeitungswerkzeuge durchgeführt wird. So kann z.B. mittels eines Werkzeugwechsels das jeweilige Bearbeitungsaggregat mit dem dazu vorbestimmten Bearbeitungswerkzeug ausgestattet werden.

Weiters ist ein Vorgehen vorteilhaft, bei dem das Reprofilieren jener zu reprofilierenden Zunge und das Reprofilieren der Schienen jeweils mittels voneinander unabhängigen, eigens dafür vorgesehenen Bearbeitungsaggregaten durchgeführt wird. Damit kann auf ansonsten zumeist erforderliche Werkzeugwechsel verzichtet werden und damit die gesamte Bearbeitungsdauer reduziert werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Teilausschnitt eines Schienenstrangs mit einer Weiche, ohne Bearbeitungsfahrzeug, in Draufsicht;
- Fig. 2: einen Querschnitt des Schienenstrangs gemäß den Linien II-II in der Fig. 1 und vergrößerter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Der Begriff "insbesondere" wird nachfolgend so verstanden, dass es sich dabei um eine mögliche speziellere Ausbildung oder nähere Spezifizierung eines Gegenstands oder eines Verfahrensschritts handeln kann, aber nicht unbedingt eine zwingende, bevorzugte Ausführungsform desselben oder eine zwingende Vorgehensweise darstellen muss.

In ihrer vorliegenden Verwendung sollen die Begriffe "umfassend", "weist auf", "aufweisend", "schließt ein", "einschließlich", "enthält", "enthaltend" und jegliche Variationen dieser eine nicht ausschließliche Einbeziehung abdecken.

Als weiterer Begriff kann auch noch "wahlweise" oder "gegebenenfalls" verwendet werden. Darunter wird verstanden, dass dieser Verfahrensschritt oder diese Anlagenkomponente grundsätzlich vorhanden ist, jedoch je nach Einsatzbedingungen eingesetzt werden kann, dies jedoch nicht zwingend erfolgen muss.

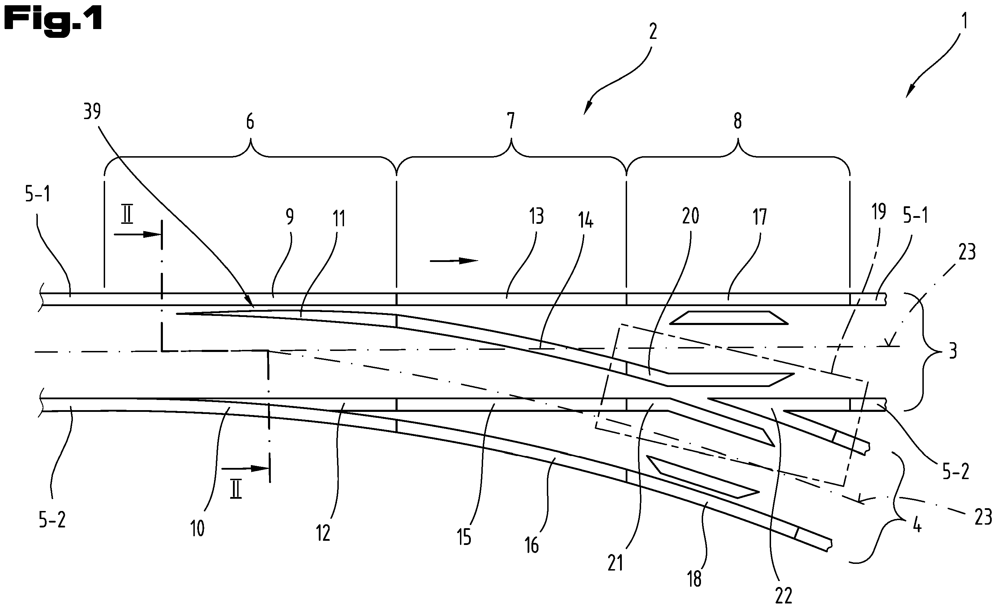

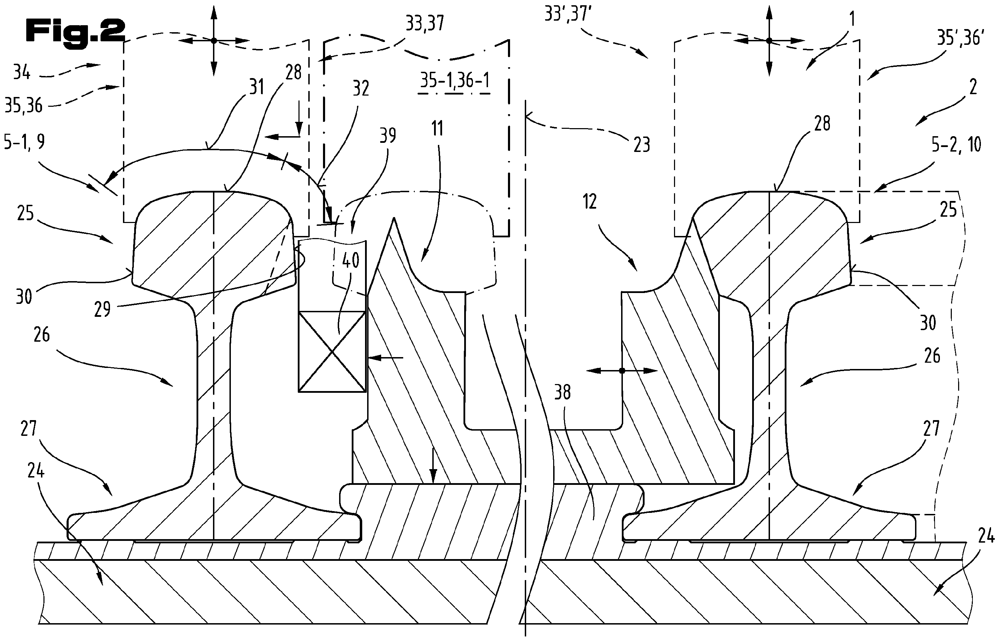

In den Fig. 1 und 2 ist ein Teilabschnitt eines Schienenstrangs 1 im Bereich oder in einem Abschnitt einer Weiche 2 gezeigt. Der Schienenstrang 1 kann auch als sogenanntes Gleis bezeichnet werden, welches für Fahrzeuge und gegebenenfalls daran angehängte Waggons zu deren schienengebundenen Fahrbewegungen dient oder ausgebildet ist.

Jener Schienenabschnitt der hier in der Fig. 1 beispielhaft dargestellten Weiche 2, welcher einen nahezu bis vollständig geradlinigen Längsverlauf aufweist, kann als Stammgleis 3 und der vom Stammgleis 3 davon seitlich abzweigende Schienenabschnitt als sogenanntes Zweiggleis 4 bezeichnet werden. Das Zweiggleis 4 zweigt hier rechts vom Stammgleis 3 ab. Es sei erwähnt, dass das gezeigte Ausführungsbeispiel der Weiche 2 nur eines von vielen möglichen Ausführungsbeispielen darstellt und z.B. auch Mehrfachweichen, Bogenweichen oder dergleichen ebenfalls unter dem allgemeinen Begriff der Weiche zu verstehen sind.

Der einfache Schienenstrang 1 bzw. das Gleis umfasst jeweils in Richtung des in der Fig.1 von links nach rechts zeigenden Pfeiles gesehen, eine linke Schiene 5-1 und eine rechte Schiene 5-2. Die Weiche 2 umfasst ihrerseits in Richtung ihrer Längserstreckung sowie in Richtung des Pfeils gesehen einen Zungenabschnitt 6, einen Zwischenschienenabschnitt 7 und einen Herzstückabschnitt 8. Die einzelnen Abschnitte sind mittels Maßpfeilen kotiert dargestellt. Weiters umfasst die Weiche 2 noch nachfolgend angeführte Einzelteile bzw. Schienenteile. Dabei handelt es sich hier im Bereich des Zungenabschnitts 6 um eine gerade oder geradlinig ausgebildete linke Backenschiene 9, eine dieser gegenüberliegend befindliche und gebogen ausgebildete rechte Backenschiene 10, eine gebogene linke Zunge 11 und eine gerade oder geradlinig ausgebildete rechte Zunge 12. Die Zungen 11, 12 können auch als Zungenschienen bezeichnet werden.

Im Bereich des Zwischenschienenabschnitts 7 sind dies eine gerade oder geradlinig ausgebildete linke Zwischenschiene 13, eine gebogene linke Zwischenschiene 14, eine gerade oder geradlinig ausgebildete rechte Zwischenschiene 15 und eine gebogene rechte Zwischenschiene 16. Schließlich sind dies im Bereich des Herzstückabschnitts 8 unter anderem eine gerade oder geradlinig ausgebildete linke Radlenkerschiene 17 und eine rechte Radlenkerschiene 18. Die linke Radlenkerschiene 17 ist dabei Bestandteil der linken Schiene 5-1 und die rechte Radlenkerschiene 18 bildet die Fortsetzung der rechten Schiene 5-2 des abzweigenden Zweiggleises 4. Ein sogenanntes Herzstück 19, welches innerhalb eines in strichpunktierten Linien eingetragenen Rechtecks umrandet dargestellt ist, umfasst eine linke Flügelschiene 20, eine rechte Flügelschiene 21 und eine Herzstückspitze 22. Dabei sei erwähnt, dass die zuvor beschriebenen und geradlinig ausgebildeten Schienen-Teilstücke auch einen gekrümmt verlaufenden Längsverlauf, wie z.B. bei Bogenweichen aufweisen können.

Die jeweils zusammengehörigen Schienen 5-1 und 5-2 sind parallel zueinander verlaufend in einer sogenannten Spurweite voneinander beabstandet angeordnet und definieren eine dazwischen verlaufende Gleisachse 23. Dies sowohl im Längsverlauf des Stammgleises 3 als auch des Zweiggleises 4. Die Gleisachse 23 bildet eine Mittelachse aus, wobei in dieser auch bei zueinander in einer Horizontalebene angeordneten Schienen 5-1 und 5-2 eine in vertikaler Ausrichtung ausgerichtete Mittelebene verlaufen kann, welche dann eine Vertikalebene bildet.

Bei einer Linksausführung einer Weiche 2 sind die zuvor angeführten Schienenabschnitte oder Schienenteile spiegelbildlich angeordnet. Auf die Funktion der aufgezählten Schienenabschnitte und Einzelteile bzw. deren Zusammenwirken mit den Rädern eines Schienenfahrzeugs wird an dieser Stelle nicht näher eingegangen, da diese dem Fachmann geläufig sind.

Wie nun besser aus der Fig. 2 zu ersehen ist, ist hier ein vergrößerter Querschnitt durch den Schienenstrang 1 mit den beiden Schienen 5-1 und 5-2 im Zungenabschnitt 6 der Weiche 2 gezeigt. Die hier linke Schiene 5-1 ist in deren vollen Querschnitt vor dem Beginn der linken Zunge 11 dargestellt, wobei die hier rechte Schiene 5-2 mit der daran angelegten rechten Zunge 12 dargestellt ist, wie dies aus den in der Fig. 1 eingetragenen Schnittlinien veranschaulicht ist. Die linke Zunge 11 der Weiche 2 ist für die ungehinderte Durchfahrt auf dem Stammgleis 3 von der linken Schiene 5-1 in Querrichtung gesehen in Richtung auf die rechte Schiene 5-2 wegverstellt und somit in Richtung auf die Gleisachse 23 hin näher zu dieser befindlich verlagert dargestellt. Dies ist auch in der Fig. 1 gezeigt.

Grundsätzlich sind die Schienen 5-1 und 5-2 in bevorzugt regelmäßigen, zumeist kurzen Abständen auf quer zu der Gleisachse 23 ausgelegten Schwellen 24 aus Beton, Stahl, Holz oder Kunststoff befestigt, wobei hier aufgrund der besseren Übersichtlichkeit halber auf die Darstellung von Befestigungselementen verzichtet worden ist.

Die Schienen 5-1 und 5-2 des Schienenstrangs 1 bilden als Gleis zusammen mit dem Kleineisen und der Bettung den Oberbau einer Bahnstrecke aus. Grundsätzlich bilden die hier gezeigten und beschriebenen Schienen 5-1, 5-2 im Bahnwesen lineare Trag- und Führungselemente und somit den vorgegebenen Fahrweg für darauf befindliche Schienenfahrzeuge. Dabei sei erwähnt, dass der Querschnitt der Schienen 5-1, 5-2 unterschiedlichst ausgebildet sein kann und dieser Querschnitt nur beispielhaft gewählt wurde.

Jede der Schienen 5-1, 5-2 umfasst in ihrem vollen Querschnitt gesehen einen Schienenkopf 25, einen Schienensteg 26 und einen Schienenfuß 27. Der Schienenkopf 25 ist dabei vom Schienensteg 26 getragen und der Schienenfuß 27 ist seinerseits an der Schwelle 24 oder einem sonstigen Auflager bzw. Untergrund direkt oder indirekt befestigt.

Der Teil des Schienenkopfs 25, der von Rädern eines Schienenfahrzeuges berührt werden kann, wird in diesem Zusammenhang als Lauffläche 28 bezeichnet. Die nicht dargestellten Räder mit deren Spurkränzen von den Schienenfahrzeuge sind jeweils an einander zugewendeten Seiten der Schienen 5-1, 5-2 angeordnet, wobei dies auch jene Seiten sind, welche der Gleisachse 23 bzw. einer Gleismitte zugewendet sind. Der außerhalb der Weiche 2 befindliche Schienenkopf 25 ist seitlich durch eine innere Seitenfläche 29 und eine dieser gegenüberliegend angeordnete äußere Seitenfläche 30 begrenzt. Der sich im Querschnitt gesehen zwischen den Seitenflächen 29 und 30 erstreckende Profilabschnitt kann im weitesten Sinn als Lauffläche 28 der Schiene 5-1, 5-2 bezeichnet werden. Die Lauffläche 28 jeder Schiene 5-1, 5-2 kann sich aus einer Fahrfläche 31 und einer Fahrkante 32 zusammensetzen. Die Fahrfläche 31 ist dabei an einer Oberseite des Schienenkopfs 25 verlaufend angeordnet, wobei die Fahrkante 32 den Übergang zur inneren Seitenfläche 29 bildet, welche der Gleismitte bzw. der Gleisachse 23 zugewendet ist. Im Bereich der Weiche 2 ist die innere Seitenfläche 29 physisch nicht vorhanden, da es sich um die Backenschiene 9, 10 handelt. Das Rad läuft somit an dem Schnittpunkt zwischen der gebogenen Fahrfläche und der Unterschleifung an.

An der Lauffläche 28 von verlegten Schienen 5-1, 5-2 entstehen mit der Zeit Schäden, wie beispielsweise Korrosion, Verschleiß, Risse, Fahrflächenfehler wie Riffel, Wellen, Radschleuderstellen, Grübchenbildung, Querprofilveränderungen wie Abflachungen der bombierten Fahrfläche, Grate, Wülste oder dergleichen. Die Verschleißerscheinungen und/oder Schäden, die sich im Wesentlichen auf den äußersten Randbereich der Lauffläche 28 beschränken, können mittels eines oder mehrerer Bearbeitungsschritte einer Profilbearbeitung durch sogenanntes Reprofilieren der Schiene 5-1, 5-2 zum größten Teil beseitigt werden. Zumeist wird durch ein spanabhebendes Bearbeitungsverfahren das verschlissene bzw. beschädigte Material des Schienenkopfs 25 an der Oberfläche der Schiene 5-1, 5-2 entfernt und der bearbeitete Schienenkopf 25 soweit als möglich wieder an ein Sollprofil der Schiene 5-1, 5-2 angenähert.

Bei der Profilbearbeitung durch Reprofilierung der Schienen 5-1, 5-2 ist eine Quer- und/oder eine Höhenführung eines bei den Schienen 5-1, 5-2 angedeuteten Bearbeitungswerkzeugs 33, 33' relativ zu einem Bearbeitungsfahrzeug 34 durchzuführen, von welchem jeweils nur eines seiner Bearbeitungswerkzeuge 33, 33' teilweise angedeutet ist. Dazu sei auf die detaillierte Beschreibung in der EP 1 820 902 A1 hingewiesen. Dabei kann bedarfsweise von der zumeist im Bereich der inneren Seitenfläche 29 durchgeführten Innenkopierung auf eine an der äußeren Seitenfläche 30 erfolgte Außenkopierung umgestellt werden. Weiters kann auch der Abtastvorgang auf der jeweils der einen Schiene 5-1, 5-2 gegenüberliegend befindlichen anderen Schiene 5-2, 5-1 erfolgen.

Die Bearbeitung oder Nachbearbeitung der Schienen 5-1, 5-2 erfolgt mittels eines nicht näher dargestellten Bearbeitungsfahrzeugs 34, welches entlang des Schienenstrangs 1 bevorzugt selbsttätig von einem Antriebsmotors entlangbewegt wird und mittels mehrerer Räder oder aus den Rädern gebildeten Radsätzen auf den Schienen 5-1, 5-2 abgestützt wird. Der Antriebsmotor steht dazu mit zumindest einzelnen der Räder in Antriebsverbindung. Das Bearbeitungsfahrzeug 34 umfasst zumeist einen Fahrzeugrahmen, der beispielsweise als Kastenoder Leiterrahmen oder in anderer Form ausgebildet sein kann. Weiters können je nach Bearbeitungsverfahren mehrere Bearbeitungsaggregate mit den jeweiligen Bearbeitungswerkzeugen vorgesehen sein. So kann bei jeder der Schienen 5-1, 5-2 ein erstes Bearbeitungsaggregat 35, 35' und gegebenenfalls diesem in Bearbeitungsrichtung gesehen, zumindest ein zweites oder weiteres Bearbeitungsaggregat 36, 36' nachgeordnet sein. Es wäre aber auch eine in Bearbeitungsrichtung dazu umgekehrte Anordnung denkbar. Da an jeder der beiden Schienen 5-1, 5-2 jeweils eines der Bearbeitungsaggregate 35, 35' und/oder 36, 36' vorgesehen sein kann, wurden diese mit der gleichen Bezugszeichennummer, jedoch zur leichteren Unterscheidung mit einem Hochkomma versehen.

Das erste Bearbeitungsaggregat 35 kann z.B. als Fräsaggregat ausgebildet sein, dessen Bearbeitungswerkzeug 33 z.B. als Umfangsfräser ausgebildet sein kann. Das Fräswerkzeug kann z.B. mit einer Vielzahl an bevorzugt auswechselbaren Wendeschneidplatten ausgestattet sein. Das mögliche weitere Bearbeitungsaggregat 36 mit seinem zumindest einen weiteren oder zweiten Bearbeitungswerkzeug 37 kann z.B. ein Schleifwerkzeug umfassen, um so eine ausreichend hohe Oberflächengüte am Bearbeitungsabschnitt der jeweiligen Schiene 5-1, 5-2 zu erzielen.

Es wäre aber auch denkbar, anstatt des spanabhebenden zweiten Bearbeitungsvorgangs das weitere oder zweite Bearbeitungsaggregat 36 mit zumindest einem Bearbeitungswerkzeug 37 zu wählen oder auszustatten, bei dem die Oberflächengüte erhöht oder verbessert wird, jedoch kein weiterer Materialabtrag mehr durchgeführt wird. Dies könnte mittels eines Material-Umformvorgangs, wie z.B. eines Walzvorgangs oder dergleichen durchgeführt werden.

Üblicher Weise werden für jede der zu bearbeitenden Schienen 5-1, 5-2 jeweils eigene Bearbeitungsaggregate 35, 35', 36, 36' vorgesehen. Dies deshalb, um bei einer Bearbeitungsfahrt beide nebeneinander befindlichen Schienen 5-1, 5-2 gleichzeitig bearbeiten und den Reprofilierungsvorgang durchführen zu können. Der besseren Übersichtlichkeit halber sind nur Teile der in Schienenlängsrichtung hintereinander befindlichen Bearbeitungsaggregate 35, 35', 36, 36' im Bereich der beiden Schienen 5-1, 5-2 angedeutet.

Die Reprofilierung zumindest der Zunge 11, 12 soll ebenfalls im Zuge der Schienen-Reprofilierung durchgeführt werden. Die Zungen 11, 12 liegen abwechselnd je nach gewählter Weichenstellung an einer der Schienen 5-1, 5-2 an. So kann die linke Zunge 11 an der linken Schiene 5-1, nämlich an deren linken Backenschiene 9, oder die rechte Zunge 12 an der rechten Schiene 5-2, nämlich an deren rechten Backenschiene 10 anliegen, wie dies hinlänglich als bekannt gilt.

Um auch die im Fahrbetrieb in annähernd vertikaler Richtung oder in vertikaler Richtung auf die jeweilige Zunge 11, 12 aufgebrachten Druckkräfte aufnehmen zu können, wird jede der Zungen 11, 12 auf der Schienenbettung, insbesondere auf zumindest einer der Schwellen 24 abgestützt, wobei dies bevorzugt jedoch unter Zwischenschaltung von zumindest einer sogenannten Gleitstuhlplatte 38 erfolgen kann. Damit wird es möglich, jede der Zungen 11, 12 querverschieblich bezüglich der Gleisachse 23 zu lagern und auch eine Kraftübertragung von der jeweiligen Zunge 11, 12 auf die Schienenbettung, insbesondere auf zumindest eine der Schwellen 24, durchführen zu können. Die Gleitstuhlplatte 38 kann sich auch noch unterhalb der Schienen 5-1, 5-2, nämlich deren Backenschienen 9, 10, in Querrichtung hindurch erstrecken. Damit kann eine noch besserer höhenmäßige Ausrichtung der jeweiligen Backenschiene 9, 10 und der zugehörigen Zunge 11, 12 erzielt werden.

Bei der Profilbearbeitung durch Reprofilierung erfolgt dies bevorzugt zuerst an den jeweiligen zusammengehörigen Schienen 5-1, 5-2 des Schienenstrangs 1. Damit werden zuerst die den Schienenstrang 1 bildenden Schienen 5-1, 5-2 reprofiliert und dies in bekannter Weise insbesondere an deren Lauffläche 28. Nachfolgend sollen zumindest die zu reprofilierenden Zungen 11, 12 des Schienenstrangs 1 ebenfalls einer Profilbearbeitung durch Reprofilierung unterzogen werden. Dabei können bevorzugt die den Schienenstrang 1 bildenden Schienen 5-1, 5-2 außerhalb der Weiche 2 und/oder auch zumindest einzelne Schienen-Teilabschnitte der Schienen 5-1, 5-2 innerhalb der Weiche 2 reprofiliert werden. Bei den Schienen-Teilabschnitten kann es sich um folgende zuvor beschriebene Schienenteile, nämlich ausgewählt aus der Gruppe der Backenschiene 9, 10, der Zwischenschiene 13, 14, 15, 16, und gegebenenfalls das Herzstück 19 mit der Flügelschiene 20, 21 und gegebenenfalls der Herzstückspitze 22, handeln. Es könnten aber auch noch die beiden Radlenkerschienen 17, 18 reprofiliert werden.

Diese zuvor beschriebene Profilbearbeitung durch Reprofilierung an den jeweiligen zusammengehörigen Schienen 5-1, 5-2 kann erfolgen, muss aber nicht zwingend vor der Profilbearbeitung der Zungen 11, 12 durchgeführt werden. Die Profilbearbeitung durch Reprofilierung zumindest der Zungen 11, 12 erfolgt bei dem verlegten Schienenstrang 1 im Bereich der Weiche 2 ebenfalls mittels zumindest des einen relativ bezüglich des Bearbeitungsfahrzeugs 34 dazu verstellbar gehaltenen ersten Bearbeitungsaggregats 35 mit dessen ersten Bearbeitungswerkzeug 33. Dabei kann es sich z.B. um das zuvor beschriebene Fräswerkzeug handeln.

Es erfolgt somit das Befahren des Schienenstrangs 1 mit dem Bearbeitungsfahrzeug 34 auf den verlegten Schienen 5-1, 5-2 bis hin in den Bereich außerhalb der zu reprofilierenden Weiche 2. Dabei kann bereits das ebenfalls zuvor beschriebene Reprofilieren von zumindest einer der Schienen 5-1, 5-2 durchgeführt werden. Es wäre auch noch möglich oder wird bevorzugt auch noch durchgeführt, dass an zumindest einzelnen der zuvor beschriebenen Schienen- Teilabschnitte ebenfalls die Profilbearbeitung durch Reprofilierung vor dem Beginn der Zungenbearbeitung durchgeführt wird.

Befindet sich das Bearbeitungsfahrzeug 34 in einem Bereich noch außerhalb der Weiche 2, ist jene zu reprofilierende Zunge 11 oder 12 in einem seitlichen Abstand von der jeweils damit zusammenwirkenden Backenschiene 9 oder 10 der jeweiligen Schiene 5-1 oder 5-2 zu verstellen oder zu verlagern. Dieses beabstandete Anordnen erfolgt in Querrichtung bezüglich der vom Schienenstrang 1 definierten Gleisachse 23. Dabei wird zwischen der Backenschiene 9, 10 und jener zu reprofilierenden Zunge 11, 12 ein Spalt 39 ausgebildet, welcher sich in Richtung der Gleisachse 23 erstreckt.

Es wäre aber auch noch möglich, dass sich das Bearbeitungsfahrzeug 34 bereits in so einer Stellung auf der Weiche 2 befindet, dass ein ungehindertes Verstellen der Zungen 11, 12 möglich ist und sich das Bearbeitungsfahrzeug 34 auf jenem Gleis - nämlich dem Stammgleis 3 oder dem Zweiggleis 4 - befindet, an welchem die Zunge 11 oder 12 für die korrekte Durchfahrt durch die Weiche 2 an der jeweiligen Backenschiene 9 oder 10 anliegt. Dann wäre jene zu reprofilierenden Zunge 11 oder 12 bereits von der jeweiligen Backenschiene 9 oder 10 beabstandet angeordnet.

Je nach relativer Position des Bearbeitungsfahrzeugs 34 bezüglich jener zu reprofilierenden Zunge 11, 12 ist das Bearbeitungsfahrzeug 34 mit seinem zumindest ersten Bearbeitungswerkzeug 33 zu der jeweiligen zu reprofilierenden Zunge 11, 12 zu verbringen oder zu verfahren. Dabei sei erwähnt, dass die nachfolgend beschriebene Profilbearbeitung mit dem oder den Bearbeitungsaggregaten 35, 36 an der hier linken Schiene 5-1 analog auf das oder die Bearbeitungsaggregate 35', 36' im Bereich der hier rechten Schiene 5-2 zu übertragen sind.

Ist die Positionierung durchgeführt worden, erfolgt ein Hineinverstellen und/oder ein Verbringen zumindest eines am Bearbeitungsfahrzeug 34 gehaltenen Gegenhalters 40 innerhalb des ausgebildeten Spalts 39 zwischen der Backenschiene 9 oder 10 und jener zu reprofilierenden Zunge 11 oder 12. Dann wird der Gegenhalter 40 mit der zu reprofilierenden Zunge 11, 12 an deren einander zugewendeten Seiten in Kontakt gebracht, womit ein gegenseitiges Aneinanderliegen bewirkt wird. Bei dem in Kontakt bringen kann entweder der Gegenhalter 40 an die Zunge 11, 12 oder aber auch die Zunge 11, 12 an den Gegenhalter 40 angelegt werden.

Der Gegenhalter 40 ist derart ausgebildet, dass dieser zur Aufnahme von Druckkräften und/oder Drehmomenten geeignet ist, welche über die jeweilige daran abgestützte Zunge 11, 12 auf den Gegenhalter 40 übertragen und von diesem in weiterer Folge auf das Bearbeitungsfahrzeug 34, insbesondere auf dessen Fahrzeugrahmen, abgetragen werden. Dies erfolgt auf mechanischer Basis, wobei die Stabilität durch entsprechende Dimensionierung zu gewährleisten ist. Der Gegenhalter 40 kann auch an einem der Bearbeitungsaggregate 35, 35', 35-1, 36, 36', 36-1 angeordnet und gehalten sein und damit auch am Bearbeitungsfahrzeug 34.

Gleichzeitig damit oder nachfolgend dazu erfolgt ein positioniertes Ausrichten des zumindest einen ersten Bearbeitungsaggregats 35, 35' mit dessen ersten Bearbeitungswerkzeug 33, 33' bezüglich jener zu reprofilierenden Zunge 11, 12. Das erste Bearbeitungswerkzeug 33, 33' kann bereits im Zuge des positionierten Ausrichtens oder nachfolgend daran in Betrieb gesetzt werden, wie dies allgemein als bekannt anzusehen ist. Das nun in Betrieb befindliche zumindest eine erste Bearbeitungswerkzeug 33, 33' wird zur durchzuführenden Profilbearbeitung in Kontakt mit jener zu reprofilierenden Zunge 11 oder 12 gebracht. Dann kann mit der Durchführung des ersten Bearbeitungsschritts der Profilbearbeitung durch Reprofilierung an jener zu reprofilierenden Zunge 11 oder 12 begonnen werden, bei welchem das zumindest eine erste Bearbeitungsaggregat 35, 35' mit dessen ersten Bearbeitungswerkzeug 33, 33' an jener zu reprofilierenden Zunge 11 oder 12 entlanggeführt wird.

Während der Profilbearbeitung erfolgt ein Andrücken jener zu reprofilierenden Zunge 11 oder 12 mittels des zumindest einen ersten Bearbeitungswerkzeugs 33, 33' an den Gegenhalter 40.

Dabei stützt sich jene zu reprofilierenden Zunge 11 oder 12 in Querrichtung bezüglich der Gleisachse 23 am Gegenhalter 40 ab und ist somit positioniert gehalten. Damit kann während der Profilbearbeitung eine unbeabsichtigte Kollision des zumindest einen ersten Bearbeitungswerkzeugs 33, 33' mit der seitlich daneben befindlichen Backenschiene 9 oder 10 sicher verhindert werden.

Bevorzugt wird der zumindest eine Gegenhalter 40 während der Profilbearbeitung an jener zu reprofilierenden Zunge 11 oder 12 ebenfalls an jener zu reprofilierenden Zunge 11 oder 12 entlanggeführt. Dies kann gemeinsam mit dem ersten Bearbeitungsaggregat 35, 35', insbesondere dessen ersten Bearbeitungswerkzeug 33, 33', erfolgen oder durchgeführt werden.

Bei der Profilbearbeitung an jener zu reprofilierenden Zunge 11 oder 12 wird diese von dem zumindest einen ersten Bearbeitungswerkzeug 33, 33' mit einer Druckkraft beaufschlagt, wobei die Abstützung des oder der Bearbeitungsaggregate 35, 35', 36, 36' an dem Bearbeitungsfahrzeug 34 erfolgt. Bei jenen Bearbeitungsfahrzeugen 34, welche die Profilbearbeitung am verlegten Schienenstrang 1 durchführen, stellt zumeist die Eigenmasse die maximal mögliche aufzubringende Druckkraft dar, wird jedoch bevorzugt dazu geringer gewählt.

Je nach Querschnittsprofil, insbesondere des als Fräsrad ausgebildeten ersten Bearbeitungswerkzeugs 33, 33', wird zusätzlich zur Druckkraftkomponente, welche in Richtung auf die Bettung der Bahnstrecke, insbesondere in Richtung auf die die Schienen 5-1, 5-2 tragenden oder abstützende Schwelle 24 gerichtet ist, eine in Querrichtung bezüglich der Gleisachse 23 gerichtete weitere Druckkraftkomponente aufgebracht. Diese weitere Druckkraftkomponente ist bevorzugt jeweils auf die von der Gleisachse 23 abgewendete Seite verlaufend ausgerichtet. Die beiden Kraftkomponenten sind bei dem hier an der linken Schiene 5-1 schematisch vereinfacht dargestellten Bearbeitungswerkzeug 33 mit Pfeilen angedeutet.

Wird jene zu reprofilierende Zunge 11 oder 12 der Profilbearbeitung unterzogen, wird die aufgebrachte Querkraftkomponente durch das Anliegen und Abstützen am Gegenhalter 40 aufgenommen und schließlich auf das Bearbeitungsfahrzeug 34 übertragen, welches seinerseits in Querrichtung bezüglich der Gleisachse 23 auf den Schienen 5-1, 5-2 abgestützt ist.

Die jeweilige Zunge 11 oder 12 ist somit für die Profilbearbeitung von ihrer damit zusammenwirkenden Backenschiene 9 oder 10 mittels des Gegenhalters 40 weiterhin beabstandet gehalten. Der zuvor ausgebildete Spalt 39 kann zumindest während der Profilbearbeitung mehr oder weniger unverändert beibehalten werden. Die zumeist oder in überwiegend vertikaler Richtung auf jene zu reprofilierende Zunge 11 oder 12 aufgebrachte Druckkraftkomponente wird, falls vorgesehen auf die Gleitstuhlplatte 38, auf zumindest eine unterhalb derselben befindliche Schwelle 24 abgetragen und somit auflagernd auf der zumindest einen Schwelle 24 abgestützt. So wird es einfach möglich, die Profilbearbeitung an der jeweiligen Zunge 11 oder 12 in deren unveränderten Vertikallage durchzuführen, ohne dass diese zur Vermeidung von ungewollten Schäden an der jeweiligen unmittelbar benachbart befindlichen Schiene 5-1, 5-2 bzw. ihren Schienen-Teilabschnitten auf die von der Schwelle 24 abgewendete Richtung oder Seite angehoben werden muss.

Je nach Ausbildung und Halterung der Zunge 11, 12 musste diese bislang als gesamte Einheit um eine gewisses Ausmaß angehoben werden, um die Bearbeitung ohne Kontakt mit seitlich daneben befindlichen Schienenteilstücken durchführen zu können. Dies ist bei dieser erfindungsgemäßen Profilbearbeitung jedoch nicht mehr erforderlich. Die beiden Druckkraftkomponenten sind mit Pfeilen ausgehend von der hier linken Zunge 11 auf den Gegenhalter 40 und die Gleitstuhlplatte 38 angedeutet.

Zusätzlich wäre es noch möglich, so wie dies bevorzugt auch bei der Profilbearbeitung der Schienen 5-1, 5-2 durchgeführt wird, zur Erhöhung oder Verbesserung der Oberflächenqualität, auch den der jeweiligen Zunge 11, 12 einen weiteren Bearbeitungsschritt durchzuführen. Ist dies vorgesehen, kann unmittelbar nachfolgend an den ersten Bearbeitungsschritt mittels des ersten Bearbeitungsaggregats 35, 35' und dessen ersten Bearbeitungswerkzeug 33, 33' ein weiterer oder zweiter Bearbeitungsschritt mittels des weiteren Bearbeitungsaggregats 36, 36' mit dessen weiteren Bearbeitungswerkzeug 37, 37' an jener zu reprofilierenden Zunge 11 oder 12 durchgeführt werden.

Die Profilbearbeitung an jener zu reprofilierenden Zunge 11 oder 12 kann während der Bearbeitungsfahrt des Bearbeitungsfahrzeugs 34 durchgeführt werden, wobei sich dabei das Bearbeitungsfahrzeug 34 relativ bezüglich des Schienenstrangs 1 bewegt, dies bevorzug selbstfahrend. Es wäre aber auch noch möglich, dass die Profilbearbeitung an jener zu reprofilierenden Zunge 11, 12 bei ortsfester Anordnung des Bearbeitungsfahrzeugs 34 bezüglich des Schienenstrangs 1 und relativer Verlagerung des Bearbeitungsaggregats 35, 36, 35', 36' mit dessen Bearbeitungswerkzeug 33, 37, 33', 37' bezüglich des Bearbeitungsfahrzeugs 34 durchgeführt wird.

Wie zuvor beschrieben, kann bevorzugt die Profilbearbeitung zuerst an den Schienen 5-1, 5-2 außerhalb der Weiche 2 durchgeführt werden und dann erfolgt bevorzugt die weitere Profilbearbeitung an jenen Schienen-Teilabschnitten der Weiche 2, welche ortsfest angeordnet sind. Für die Profilbearbeitung an der Zunge 11, 12 können jene zuvor für die Profilbearbeitung an den Schienen 5-1, 5-2 verwendete Bearbeitungsaggregate 35, 36, 35', 36' verwendet werden. So wird es möglich, mit denselben Bearbeitungsaggregaten 35, 36, 35', 36' sowohl die Schienen 5-1, 5-2 als auch die Zungen 11, 12 der Profilbearbeitung zu unterziehen oder an diesen durchzuführen. In diesem Fall ist für die Durchführung des Reprofilierens jener zu reprofilierenden Zunge 11, 12 dazu vorgesehene Bearbeitungsaggregat 35, 36, 35', 36' oder sind die dazu vorgesehenen Bearbeitungsaggregate 35, 36, 35', 36' von der jeweilige Schienen 5-1, 5-2 hin zu jener zu reprofilierenden Zunge 11, 12 zu verlagern.

Je nach zu bearbeitendem Profil oder Profilquerschnitt kann es erforderlich werden, dass das Reprofilieren jener zu reprofilierenden Zunge 11, 12 und das Reprofilieren der Schienen 5-1, 5-2 mittels zueinander unterschiedlich bezüglich von deren Arbeitsprofil ausgebildeter Bearbeitungswerkzeuge 33, 37, 33', 37' durchzuführen ist. Um dies zu erzielen, kann ein Werkzeugwechsel bei den Bearbeitungswerkzeugen 33, 37, 33', 37' durchgeführt werden, um diese Anforderung erfüllen zu können.

Je nach Maschinengröße und Ausstattung des Bearbeitungsfahrzeug 34, könnte das Reprofilieren jener zu reprofilierenden Zunge 11, 12 und das Reprofilieren der Schienen 5-1, 5-2 jeweils mittels voneinander unabhängigen, eigens dafür vorgesehenen Bearbeitungsaggregaten 35, 36 und 35-1, 36-1 durchgeführt werden. So könnten z.B. die Bearbeitungsaggregate 35, 36 für die Profilbearbeitung der Schienen 5-1, 5-2 und gegebenenfalls auch der ortsfesten Schienen-Teilabschnitte im Bereich der Weiche 2 verwendet werden.

Die zusätzlichen Bearbeitungsaggregate 35-1, 36-1 können zumindest für die Profilbearbeitung der Zungen 11, 12 und gegebenenfalls auch noch für die Profilbearbeitung an zumindest einzelnen der Schienen-Teilabschnitte des Herzstücks 19 verwendet oder eingesetzt werden. Die zusätzlichen Bearbeitungsaggregate 35-1, 36-1 können bedarfsweise auch beidseits und somit nebeneinander für jeweils eine der Schienen 5-1, 5-2 vorgesehen werden.

Abschließend sei noch erwähnt, dass die einzelnen Verfahrensschritte und deren zeitliche Abfolge nicht zwingend in der angeführten Reihenfolge erfolgen müssen, sondern auch eine davon abweichende zeitliche Abfolge möglich ist. Bevorzugt erfolgt jedoch eine sukzessive und somit aufeinander folgende zeitliche Abfolge der angeführten Verfahrensschritte.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| | | 30 | äußere Seitenfläche |
| 1 | Schienenstrang | 31 | Fahrfläche |
| 2 | Weiche | 32 | Fahrkante |
| 3 | Stammgleis | 33 | Bearbeitungswerkzeug |
| 4 | Zweiggleis | 34 | Bearbeitungsfahrzeug |
| 5 | Schiene | 35 | erstes Bearbeitungsaggregat |
| 6 | Zungenabschnitt | 36 | zweites Bearbeitungsaggregat |
| 7 | Zwischenschienenabschnitt | 37 | Bearbeitungswerkzeug |
| 8 | Herzstückabschnitt | 38 | Gleitstuhlplatte |
| 9 | linke Backenschiene | 39 | Spalt |
| 10 | rechte Backenschiene | 40 | Gegenhalter |
| 11 | linke Zunge | | |
| 12 | rechte Zunge | | |
| 13 | linke Zwischenschiene | | |
| 14 | linke Zwischenschiene | | |
| 15 | rechte Zwischenschiene | | |
| 16 | rechte Zwischenschiene | | |
| 17 | linke Radlenkerschiene | | |
| 18 | rechte Radlenkerschiene | | |
| 19 | Herzstück | | |
| 20 | linke Flügelschiene | | |
| 21 | rechte Flügelschiene | | |
| 22 | Herzstückspitze | | |
| 23 | Gleisachse | | |
| 24 | Schwelle | | |
| 25 | Schienenkopf | | |
| 26 | Schienensteg | | |
| 27 | Schienenfuß | | |
| 28 | Lauffläche | | |
| 29 | innere Seitenfläche | | |

## Patentansprüche

1. Verfahren zum Reprofilieren von zumindest einer Zunge (11, 12) von einer in einem Schienenstrang (1) verlegten Weiche (2) mittels zumindest eines an einem Bearbeitungsfahrzeug (34) relativ dazu verstellbar gehaltenen ersten Bearbeitungsaggregats (35, 35') mit einem ersten Bearbeitungswerkzeug (33, 33'), bei dem folgende Schritte durchgeführt werden:
- Befahren des Schienenstrangs (1) auf dessen verlegten Schienen (5-1, 5-2) mit dem Bearbeitungsfahrzeug (34) bis in den Bereich außerhalb der zu reprofilierenden Weiche (2),
- beabstandetes Anordnen jener zu reprofilierenden Zunge (11, 12) von jener mit der Zunge (11, 12) zusammenwirkenden Backenschiene (9, 10) der Schienen (5-1, 5-2) in Querrichtung bezüglich einer vom Schienenstrang (1) definierten Gleisachse (23) und dabei Ausbilden eines sich in Richtung der Gleisachse (23) erstreckenden Spalts (39) zwischen der Backenschiene (9, 10) und jener zu reprofilierenden Zunge (11, 12),
- Verbringen des Bearbeitungsfahrzeugs (34) mit seinem zumindest einen ersten Bearbeitungswerkzeug (33, 33') zu jener zu reprofilierenden Zunge (11, 12),
- Hineinverstellen und Verbringen zumindest eines am Bearbeitungsfahrzeug (34) gehaltenen Gegenhalters (40) innerhalb des ausgebildeten Spalts (39) zwischen der Backenschiene (9, 10) und jener zu reprofilierenden Zunge (11, 12),
- Durchführen eines ersten Bearbeitungsschritts der Profilbearbeitung durch Reprofilierung an jener zu reprofilierenden Zunge (11, 12), bei der das zumindest eine erste Bearbeitungsaggregat (35, 35') mit dessen ersten Bearbeitungswerkzeug (33, 33') an jener zu reprofilierenden Zunge (11, 12) entlanggeführt wird, und
- Andrücken jener zu reprofilierenden Zunge (11, 12) während der Profilbearbeitung mittels des zumindest einen ersten Bearbeitungswerkzeugs (33, 33') an den Gegenhalter (40) und Abstützen jener zu reprofilierenden Zunge (11, 12) in Querrichtung bezüglich der Gleisachse (23) am Gegenhalter (40).

2. Verfahren nach Anspruch 1, **dadurch gekennzeichnet, dass** der zumindest eine Gegenhalter (40) während der Profilbearbeitung an jener zu reprofilierenden Zunge (11, 12) ebenfalls an jener zu reprofilierenden Zunge (11, 12) entlanggeführt wird.

3. Verfahren nach Anspruch 1 oder 2, **dadurch gekennzeichnet, dass** jene zu reprofilierenden Zunge (11, 12) während der Profilbearbeitung auf zumindest einer unterhalb derselben befindlichen Schwelle (24), gegebenenfalls unter Zwischenschaltung einer Gleitstuhlplatte (38), auflagernd auf der zumindest einen Schwelle (24) abgestützt wird.

4. Verfahren nach einem der vorhergehenden Ansprüche, **dadurch gekennzeichnet, dass** unmittelbar nachfolgend an den ersten Bearbeitungsschritt mittels des ersten Bearbeitungsaggregats (35, 35') und dessen ersten Bearbeitungswerkzeug (33, 33') ein weiterer Bearbeitungsschritt mittels eines weiteren Bearbeitungsaggregats (36, 36') mit dessen weiteren Bearbeitungswerkzeug (37, 37') an jener zu reprofilierenden Zunge (11, 12) durchgeführt wird.

5. Verfahren nach einem der vorhergehenden Ansprüche, **dadurch gekennzeichnet, dass** die Profilbearbeitung an jener zu reprofilierenden Zunge (11, 12) während der Bearbeitungsfahrt des Bearbeitungsfahrzeugs (34) durchgeführt wird.

6. Verfahren nach einem der Ansprüche 1 bis 4, **dadurch gekennzeichnet, dass** die Profilbearbeitung an jener zu reprofilierenden Zunge (11, 12) bei ortsfester Anordnung des Bearbeitungsfahrzeugs (34) und relativer Verlagerung des Bearbeitungsaggregats (35, 36; 35', 36') mit dessen Bearbeitungswerkzeug (33, 37, 33', 37') bezüglich des Bearbeitungsfahrzeugs (34) durchgeführt wird.

7. Verfahren nach einem der vorhergehenden Ansprüche, **dadurch gekennzeichnet, dass** vor dem Beginn der Bearbeitungsschritte der Profilbearbeitung an jener zu reprofilierenden Zunge (11, 12) zuerst die den Schienenstrang (1) bildenden Schienen (5-1, 5-2) reprofiliert werden, insbesondere an deren Lauffläche (28) reprofiliert werden.

8. Verfahren nach Anspruch 7, **dadurch gekennzeichnet, dass** die den Schienenstrang (1) bildenden Schienen (5-1, 5-2) außerhalb der Weiche (2) reprofiliert werden.

9. Verfahren nach Anspruch 7 oder 8, **dadurch gekennzeichnet, dass** zumindest einzelne Schienen-Teilabschnitte der Schienen (5-1, 5-2) innerhalb der Weiche (2) reprofiliert werden, insbesondere die Backenschiene (9, 10), die Zwischenschiene (13, 14, 15, 16) das Herzstück (19) mit der Flügelschiene (21) und gegebenenfalls der Herzstückspitze (22), reprofiliert werden.

10. Verfahren nach einem der vorhergehenden Ansprüche, **dadurch gekennzeichnet, dass** das Reprofilieren der Schienen (5-1, 5-2) und auch das Reprofilieren jener zu reprofilierenden Zunge (11, 12) jeweils mit denselben Bearbeitungsaggregaten (35, 36; 35', 36') durchgeführt wird.

11. Verfahren nach Anspruch 10, **dadurch gekennzeichnet, dass** für die Durchführung des Reprofilierens jener zu reprofilierenden Zunge (11, 12) das Bearbeitungsaggregat (35, 36; 35', 36') oder die Bearbeitungsaggregate (35, 36; 35', 36') von der jeweiligen Schiene (5-1, 5-2) zu jener zu reprofilierenden Zunge (11, 12) hin verlagert werden.

12. Verfahren nach einem der vorhergehenden Ansprüche, **dadurch gekennzeichnet, dass** das Reprofilieren jener zu reprofilierenden Zunge (11, 12) und das Reprofilieren der Schienen (5-1, 5-2) mittels zueinander unterschiedlich bezüglich von deren Arbeitsprofil ausgebildeter Bearbeitungswerkzeuge (33, 37; 33', 37') durchgeführt wird.

13. Verfahren nach einem der Ansprüche 1 bis 9 oder 12, **dadurch gekennzeichnet, dass** das Reprofilieren jener zu reprofilierenden Zunge (11, 12) und das Reprofilieren der Schienen (5-1, 5-2) jeweils mittels voneinander unabhängigen, eigens dafür vorgesehenen Bearbeitungsaggregaten (35, 36; 35-1, 36-1) durchgeführt wird.

## Claims

1. A method for reprofiling at least one switch blade (11, 12) of a railroad switch (2) laid in a railway track (1) by means of at least a first machining aggregate (35, 35') held on a machining vehicle (34) and adjustable relative thereto, with a first machining tool (33, 33'), whereby the following steps are performed:
- travelling on the laid rails (5-1, 5-2) of the railway track (1) with the machining vehicle (34) up into the area outside of the railroad switch (2) to be reprofiled,
- spaced arrangement of the switch blade (11, 12) to be reprofiled from the stock rail (9, 10) of the rails (5-1, 5-2) which interacts with the switch blade (11, 12) in transverse direction with respect to a track axis (23) defined by the railway track (1) and thereby formation of a gap (39) extending in the direction of the track axis (23) between the stock rail (9, 10) and the switch blade (11, 12) to be reprofiled,
- conveyance of the machining vehicle (34) with its at least first machining tool (33, 33') to the switch blade (11, 12) to be reprofiled,
- positioning and conveyance of at least one counterhold (40) held on the machining vehicle (34) within the gap (39) formed between the stock rail (9, 10) and the switch blade (11, 12) to be reprofiled,
- performance of a first machining step of the profiling by reprofiling on the switch blade (11, 12) to be reprofiled whereby the at least first machining aggregate (35, 35') with its first machining tool (33, 33') is guided along the switch blade (11, 12) to be reprofiled, and
- pressing the switch blade (11, 12) to be reprofiled against the counterhold (40) during profiling by means of at least a first machining tool (33, 33') and supporting the switch blade (11, 12) to be reprofiled on the counterhold (40) in a transverse direction with respect to the track axis (23).

2. The method according to Claim 1, **characterized in that** the at least one counterhold (40) is also guided along the switch blade (11, 12) to be reprofiled during profiling of the switch blade (11, 12) to be reprofiled.

3. The method according to Claim 1 or 2, **characterized in that** the switch blade (11, 12) to be reprofiled is supported during profiling on at least a sleeper (24) positioned beneath it, where necessary by interposing a slide chair plate (38) resting upon the at least one sleeper (24).

4. The method according to one of the preceding Claims, **characterized in that** immediately following the first machining step by means of the first machining aggregate (35, 35') and its first machining tool (33, 33'), a further machining step is performed on the switch blade (11, 12) to be reprofiled by means of a further machining aggregate (36, 36') with its further machining tool (37, 37').

5. The method according to one of the preceding Claims, **characterized in that** the profiling on the switch blade (11, 12) to be reprofiled is performed during the machining journey of the machining vehicle (34).

6. The method according to one of Claims 1 to 4, **characterized in that** the profiling on the switch blade (11, 12) to be reprofiled is performed with stationary arrangement of the machining vehicle (34) and relative displacement of the machining aggregate (35, 36; 35', 36') with its machining tool (33, 37, 33', 37') with respect to the machining vehicle (34).

7. The method according to one of the preceding Claims, **characterized in that** prior to commencement of the profiling machining steps on the switch blade (11, 12) to be reprofiled, the rails (5-1, 5-2) forming the railway track (1) are first reprofiled, in particular on their running surface (28).

8. The method according to Claim 7, **characterized in that** the rails (5-1, 5-2) forming the railway track (1) are reprofiled outside of the railroad switch (2).

9. The method according to Claim 7 or 8, **characterized in that** at least individual partial rail sections of the rails (5-1, 5-2) are reprofiled within the railroad switch (2), in particular the stock rail (9, 10), the closure rail (13, 14, 15, 16), the frog (19) with the wing rail (21) and where necessary the frog tip (22).

10. The method according to one of the preceding Claims, **characterized in that** the reprofiling of the rails (5-1, 5-2) as well as the reprofiling of the switch blade (11, 12) to be reprofiled are each performed with the same machining aggregates (35, 36; 35', 36').

11. The method according to Claim 10, **characterized in that** for the performance of the reprofiling of the switch blade (11, 12) to be reprofiled, the machining aggregate (35, 36; 35', 36') or the machining aggregates (35, 36; 35', 36') are displaced from the respective rail (5-1, 5-2) to the switch blade (11, 12) to be reprofiled.

12. The method according to one of the preceding claims, **characterized in that** the reprofiling of the switch blade (11, 12) to be reprofiled and the reprofiling of the rails (5-1, 5-2) is performed by means of machining tools (33, 37; 33', 37') which differ from one another with respect to their working profile.

13. The method according to one of Claims 1 to 9 or 12, **characterized in that** the reprofiling of the switch blade (11, 12) to be reprofiled and the reprofiling of the rails (5-1, 5-2) are each performed by means of mutually independent machining aggregates (35, 36; 35-1, 36-1) specifically intended for said task.

## Revendications

1. Procédé de reprofilage d'au moins une lame (11, 12) d'un aiguillage (2) posé dans une voie ferrée (1) au moyen d'au moins un premier agrégat d'usinage (35, 35') maintenu sur un véhicule d'usinage (34) de manière réglable par rapport à celui-ci, avec un premier outil d'usinage (33, 33'), dans lequel les étapes suivantes sont exécutées :
- parcours de la vie ferrée (1) sur ses rails posés (5-1, 5-2) avec le véhicule d'usinage (34) jusqu'à la zone hors de l'aiguillage (2) à reprofiler,
- disposition à distance de la lame à reprofiler (11, 12) de la contre-aiguille (9, 10) des rails (5-1, 5-2), interagissant avec la lame (11, 12), dans la direction transversale par rapport à un axe de voie (23), défini par la voie ferrée (1), et formation d'un interstice (39) s'étendant dans la direction de l'axe de voie (23) entre la contre-aiguille (9, 10) et la lame à reprofiler (11, 12),
- déplacement du véhicule d'usinage (34) avec son au moins un premier outil d'usinage (33, 33') vers la lame à reprofiler (11, 12),
- réglage vers l'intérieur et déplacement d'au moins un contre-support (40) maintenu sur le véhicule d'usinage (34) à l'intérieur de l'interstice (39) formé entre la contre-aiguille (9, 10) et la lame à reprofiler (11, 12),
- exécution d'une première étape d'usinage de l'usinage de profilé par reprofilage sur la lame à reprofiler (11, 12), dans laquelle l'au moins un premier agrégat d'usinage (35, 35') est guidé, avec son premier véhicule d'usinage (33, 33'), le long de la lame à reprofiler (11, 12) et
- compression de la lame à reprofiler (11, 12), pendant l'usinage de profilé, au moyen de l'au moins un premier outil d'usinage (33, 33'), contre le contre-support (40) et appui de la lame à reprofiler (11, 12) dans la direction transversale par rapport à l'axe de voie (23) contre le contre-support (40).

2. Procédé selon la revendication 1, **caractérisé en ce que** l'au moins un contre-support (40) est guidé, pendant l'usinage de profilé, le long de la lame à reprofiler (11, 12), également le long de la lame à reprofiler (11, 12).

3. Procédé selon la revendication 1 ou 2, **caractérisé en ce que** la lame à reprofiler (11, 12) est appuyée, pendant l'usinage de profilé, sur au moins une traverse (24) se trouvant en dessous de celle-ci, également en intercalant une plaque à coussinet de glissement (38), sur l'au moins une traverse (24).

4. Procédé selon l'une des revendications précédentes, **caractérisé en ce que**,
immédiatement après la première étape d'usinage, au moyen du premier agrégat d'usinage (35, 35') et de son premier outil d'usinage (33, 33'), une autre étape d'usinage est effectuée, au moyen d'un autre agrégat d'usinage (36, 36') avec son autre outil d'usinage (37, 37'), sur la lame à reprofiler (11, 12).

5. Procédé selon l'une des revendications précédentes, **caractérisé en ce que** l'usinage de profilé est effectué sur la lame à reprofiler (11, 12) pendant le mouvement d'usinage du véhicule d'usinage (34).

6. Procédé selon l'une des revendications 1 à 4, **caractérisé en ce que** l'usinage de profilé est effectué sur la lame à reprofiler (11, 12), avec une disposition fixe du véhicule d'usinage (34) et un déplacement relatif de l'agrégat d'usinage (35, 36 ; 35', 36') avec son outil d'usinage (33, 37, 33', 37') par rapport au véhicule d'usinage (34).

7. Procédé selon l'une des revendications précédentes, **caractérisé en ce que**, avant le début des étapes d'usinage de l'usinage de profilé sur la lame à reprofiler (11, 12), les rails (5-1, 5-2) formant la voie ferrée (1) sont d'abord reprofilés, plus particulièrement sur leur surface de roulement (28).

8. Procédé selon la revendication 7, **caractérisé en ce que** les rails (5-1, 5-2) formant la voie ferrée (1) hors de l'aiguillage (2) sont reprofilés.

9. Procédé selon la revendication 7 ou 8, **caractérisé en ce qu'**au moins certaines portions des rails (5-1, 5-2) à l'intérieur de l'aiguillage (2) sont reprofilées, plus particulièrement les contre-aiguilles (9, 10), les rails intermédiaires (13, 14, 15, 16), le cœur de croisement (19) avec la patte de lièvre (21) et, le cas échéant la pointe du cœur de croisement (22), sont reprofilés.

10. Procédé selon l'une des revendications précédentes, **caractérisé en ce que** le reprofilage des rails (5-1, 5-2) ainsi que le reprofilage de la lame à reprofiler (11, 12) sont effectués respectivement avec les mêmes agrégats d'usinage (35, 36 ; 35', 36').

11. Procédé selon la revendication 10, **caractérisé en ce que**, pour l'exécution du reprofilage de la lame à reprofiler (11, 12), l'agrégat d'usinage (35, 36 ; 35', 36') ou les agrégats d'usinage (35, 36 ; 35', 36') sont déplacés du rail (5-1, 5-2) respectif vers la lame à reprofiler (11, 12).

12. Procédé selon l'une des revendications précédentes, **caractérisé en ce que** le reprofilage de la lame à reprofiler (11, 12) et le reprofilage des rails (5-1, 5-2) sont effectués au moyen d'outils d'usinage (33, 37 ; 33', 37') différents entre eux en ce qui concerne leur profilé de travail.

13. Procédé selon l'une des revendications 1 à 9 ou 12, **caractérisé en ce que** le reprofilage de la lame à reprofiler (11, 12) et le reprofilage des rails (5-1, 5-2) sont effectués au moyen d'agrégats d'usinage (35, 36 ; 35-1, 36-1) indépendants entre eux, spécifiquement prévus à cet effet.
